# EUROPEAN PATENT SPECIFICATION

(11) **EP 3 940 089 B1**
(45) Date of publication and mention of the grant of the patent: **06.03.2024**
(21) Application number: 21153214.8
(22) Date of filing: 25.01.2021
(51) Int. Cl.: C22C 38/48, C22C 38/46, C22C 38/44, C22C 38/02, C22C 38/04, C21D 1/02, C21D 1/06, C21D 1/58, C21D 6/00, C21D 8/00, C23C 8/02, C23C 8/22, F16C 33/64, F16C 33/62

(54) **CARBURIZING BEARING STEEL AND PREPARATION METHOD THEREOF**
EINSATZHÄRTEN VON LAGERSTAHL UND HERSTELLUNGSVERFAHREN DAFÜR
ACIER CÉMENTÉ POUR ROULEMENTS ET SON PROCÉDÉ DE PRÉPARATION

(30) Priority: 16.07.2020 CN 202010683855
(43) Date of publication of application: 19.01.2022
(73) Proprietor: Central Iron & Steel Research Institute, Beijing 100081 (CN)
(72) Inventor: CAO, Wenquan, Beijing, Beijing 100081 (CN); YU, Feng, Beijing, Beijing 100081 (CN); WANG, Cunyu, Beijing, Beijing 100081 (CN); XU, Haifeng, Beijing, Beijing 100081 (CN); WANG, Hui, Beijing, Beijing 100081 (CN); XU, Da, Beijing, Beijing 100081 (CN); WENG, Yuqing, Beijing, Beijing 100081 (CN)
(74) Representative: Wallinger Ricker Schlotter Tostmann

(56) References cited:
- CN-A- 107 502 810
- CN-A- 107 904 498
- JP-A- H07 109 541
- JP-A- H07 126 804
- JP-A- H07 278 740
- JP-A- H08 188 849
- JP-A- 2013 147 689
- US-B1- 6 447 619

## Description

### TECHNICAL FIELD

The present disclosure relates to the technical field of microstructure refinement and homogenization of bearing steel, and specifically relates to a carburizing bearing steel and a preparation method thereof.

### BACKGROUND

Bearings are almost the essential key basic parts of all the transmissions, the fatigue life of which determines the service life and reliability of the machine and equipment. At present, carburizing bearing steel commonly used at home and abroad in the field of bearings with impact resistance and long service life, for example, civilian bearing steel such as G20CrNiMo, G20CrNi2Mo, and G20Cr2Ni4Mo, and military bearing steel such as M50NiL and CSS-42L, generally has low contact fatigue life and fatigue strength, which cannot meet the requirements of long service life and high reliability for high-end equipment.

To improve the fatigue life of bearing steel, a lot of researches on improving the contact fatigue life of bearing steel have been carried out at home and abroad, which mainly employ the means of reducing the content of inclusions contained in the bearing steel, decreasing the size of inclusions in the bearing steel, and controlling the types and distribution of inclusions in the bearing steel. Upon nearly 30 years of cross-century development, at present, the fatigue life of the carburizing bearing steel G20CrNi2Mo refined out of furnace has been kept at L₁₀ ≥ 4~6×10⁷ times, and there has been no further progress, so the requirements of long life and high reliability for high-end equipment cannot be satisfied. It can be seen that employing an out-of-furnace refining process to further reduce the oxygen content and decrease the size and content of inclusions not only greatly increases the cost and reduces the production efficiency, furthermore, the contact fatigue life cannot be enhanced greatly. Therefore, high-end bearings used in railway, shield, machine tools and the like require Electro-slag Remelting (ESR) and double vacuum (Vacuum Induction Melting (VIM) + Vacuum Arc Remelting (VAR)) G20CrNi2Mo (L₁₀ ≥ 5.0×10⁷ times) bearing steel which are expensive and have long contact fatigue life. However, ESR bearing steel and VIM+VAR bearing steel cannot meet the production requirements, meanwhile the cost is greatly increased.

The US 6,447,619 B1 discloses high surface pressure resistant steel parts and their production methods. These steel parts are useful as gears, cams, bearings and similar high-strength compact steel articles which are required to have wear resistance and strength to withstand fatigue in rolling or rolling-slipping applications. In a steel part formed according to this document, a fine nitride and/or carbonitride having at least an average grain size of 0.3 µm or less is dispersed in the contact surface structure; a multi phase structure composed of martensite, which is divided into extremely fine pieces, forming a disordered shape, by the nitride and/or carbonitride, is formed; and a carbide having a grain size of 3 µm or less is dispersed to increase the hardness of the surface. Such a steel part is produced by carrying out carbonitriding or carburization/carbonitriding so as to precipitate extremely fine AlN, using nitrogen permeating from the surface and by carrying out quenching or quenching/tempering, starting from a temperature region where the parent phase is austenite.

The JP H07 109541 A discloses an ultracleanliness bearing steel and a production method of the ultracleanliness bearing steel. In this method, a bearing steel in which the content of Mn is limited to ≤ 0.20 % is used as a base metal, and the steel is molten by electron beams, the residence time of the molten metal of the bearing steel in a rectangular platelike container made of copper for water-cooling refining is regulated so as to secure the time required for floating-up and separating oxide nonmetallic inclusions having ≥15 µm diameter from the molten metal in the conditions that the dimension of the refining container, the position of baking and the melting speed satisfy the relationship expressed by the formula. Thus, the ultracleanliness bearing steel whose oxide inclusion grains is regulated to ≤ 15 µm diameter can be obtained.

### SUMMARY

The present disclosure is intended to provide a carburizing bearing steel, where there is no need to rely on electro-slag remelting (ESR) and double vacuum melting (VIM + VAR), and microalloying elements are only utilized to enhance the contact fatigue life of carburizing bearing steel, thus meeting the extensive performance requirements of long life, high reliability and low cost for bearing steel used in high-end equipment.

The problem of the present invention is solved by a carburizing bearing steel according to the independent claim 1 as well as by a preparation method of the carburizing bearing steel according to the independent claim 3. The dependent claim refers to a further advantageous development of the present invention.

In the present disclosure, on the basis of the ingredient G20CrNi2Mo of the carburizing bearing steel, an appropriate amount of Nb and V are added in combination with other elements so as to refine the grain size, inhibit the generation of large granular carbides in the steel during carburization and improve the uniformity of the microstructure of steel materials, thus further enhancing the contact fatigue life of the carburizing bearing steel. Results from examples show that, the contact fatigue life of the carburizing bearing steel containing Nb and V in the present disclosure has been enhanced by more than 2-4 times compared to the traditional carburizing bearing steel, which can meet the extensive performance requirements of long life, high reliability and low cost for high-end equipment.

### BRIEF DESCRIPTION OF THE DRAWINGS

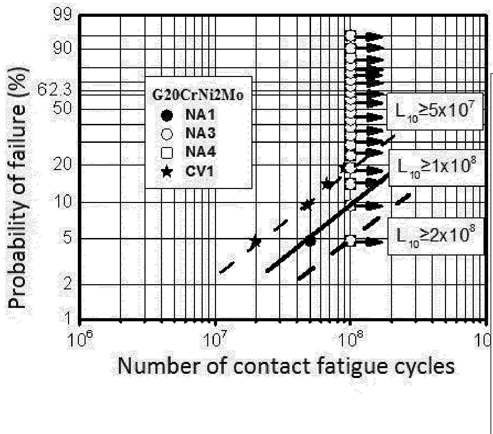

Fig. 1 is a diagram showing the weibull distribution of the contact fatigue life of the carburizing bearing steel in the present disclosure compared to traditional carburizing bearing steel.

### DETAILED DESCRIPTION

The present disclosure provides a carburizing bearing steel, comprising elements in the following contents: 0.18-0.24 wt% of C, 0.4-0.6 wt% of Cr, 0.20-0.40 wt% of Si, 0.40-0.70 wt% of Mn, 1.6-2.2 wt% of Ni, 0.15-0.35 wt% of Mo, 0.001-0.01 wt% of S, 0.001-0.015 wt% of P, 0.04-0.20 wt% of Nb, 0.04-0.20 wt% of V and the remaining iron.

The carburizing bearing steel provided by the present disclosure comprises 0.18-0.24 wt% of C, preferably 0.19-0.23 wt%, and more preferably 0.20-0.22 wt%.

The carburizing bearing steel provided by the present disclosure comprises 0.4-0.6 wt% of Cr, preferably 0.45-0.55 wt%, and more preferably 0.55 wt%.

The carburizing bearing steel provided by the present disclosure comprises 0.20-0.40 wt% of Si, preferably 0.25-0.35 wt%, and more preferably 0.30 wt%.

The carburizing bearing steel provided by the present disclosure comprises 0.40-0.70 wt% of Mn, preferably 0.5-0.6 wt%, and more preferably 0.55 wt%.

The carburizing bearing steel provided by the present disclosure comprises 1.6-2.2 wt% of Ni, preferably 1.7-2.1 wt%, and more preferably 1.8-2.0 wt%.

The carburizing bearing steel provided by the present disclosure comprises 0.15-0.35 wt% of Mo, preferably 0.20-0.30 wt%, and more preferably 0.25 wt%.

The carburizing bearing steel provided by the present disclosure comprises 0.001-0.01 wt% of S, preferably 0.003-0.008 wt%.

The carburizing bearing steel provided by the present disclosure comprises 0.001-0.015 wt% of P, preferably 0.005-0.010 wt%.

The carburizing bearing steel provided by the present disclosure comprises 0.04-0.20 wt % of Nb, and

preferably 0.08-0.15 wt%.

The carburizing bearing steel provided by the present disclosure comprises 0.04-0.20 wt% of V, and preferably 0.08-0.15 wt%.

The total quantity of Nb and V is preferably less than 0.3 wt%, more preferably 0.10-0.20 wt%.

In the present disclosure, on the basis of the ingredient G20CrNi2Mo of the carburizing bearing steel, an appropriate amount of Nb and V are added as microalloying elements in combination with other elements so as to refine the grain size, inhibit the generation of large granular carbides in the steel during carburization and improve the uniformity of the microstructure of steel materials, thus further enhancing the contact fatigue life of the carburizing bearing steel.

The present disclosure provides a preparation method of the carburizing bearing steel in the above solution, comprising the following steps:
Preparation raw materials of the carburizing bearing steel are smelted to get steel ingots; the steel ingots have a chemical composition corresponding to the chemical composition of the carburizing bearing steel in the above solution;
The steel ingots are homogenized and then processed into bars;
The bars are successively subject to carburizing treatment, quenching and annealing to get the carburizing bearing steel.

In the present disclosure, preparation raw materials of the carburizing bearing steel are smelted to get steel ingots. In the present disclosure, the smelting way is electro-slag remelting (ESR), double vacuum melting (VIM + VAR), out-of-furnace refining or vacuum induction melting. To reduce the production cost, the present disclosure further preferably employs out-of-furnace refining or vacuum induction melting. Any of electro-slag remelting (ESR), double vacuum melting (VIM + VAR), out-of-furnace refining or vacuum induction melting, can be used for the smelting process. The smelting of the present disclosure is suitable for a converter, an electric furnace or an induction furnace. In the present disclosure, the steel ingots have a chemical composition corresponding to the chemical composition of the carburizing bearing steel in the above solution. The present disclosure has no special requirements on the types and sources of various preparation raw materials, as long as meeting the requirement on the ingredients of the steel ingots. In the present disclosure, smelting is carried out so that the oxygen content in the bearing steel is not higher than 20 ppm and the size of large granular inclusions (DS) is ≤ 40 microns.

In the present disclosure, after the steel ingots are obtained, they are homogenized and then processed into bars.

In the present disclosure, the temperature for homogenization is 1100~1250°C, and more preferably 1200 °C; the holding time is 2~6 hours, and more preferably 3-5 hours. Upon the completion of homogenization, the resulting billet is processed into bars. In the present disclosure, the processing way is hot forging or hot rolling, the initial temperature for hot forging or hot rolling is 1150~1200 °C, and the temperature for finish forging or finish rolling is not lower than 900°C. The present disclosure has no special requirement on the size of the bars, as long as being set according to the requirements on the carburizing bearing steel. In the examples of the present disclosure, the size of the bars is Φ60 mm. In the present disclosure, the processed bars are preferably cooled in water to room temperature, and then subject to the subsequent steps.

In the present disclosure, after the bars are obtained, they are successively subject to carburizing treatment, quenching and annealing to get the carburizing bearing steel.

In the present disclosure, the temperature for carburizing treatment is 930 °C ±10 °C, and more preferably 930 °C; the holding time is 6~12 hours, and more preferably 8~10 hours; in the present disclosure, the bars after carburizing treatment are cooled in oil to room temperature. The present disclosure has no special limitation on the process of carburizing treatment, any carburizing process well known in the art can be used. Oil cooling is employed in the present disclosure so as to avoid the occurrence of superficial networks, which may affect the toughness and the contact fatigue performances.

Upon the completion of carburizing treatment, the resulting bars are quenched in the present disclosure to get the quenched bars.

In the present disclosure, the temperature for quenching is 820 °C ±10 °C, and more preferably 820 °C; the holding time is 0.5~2 hours, and more preferably 1 hour: the cooling way for quenching is oil quenching to room temperature. The present disclosure has no special requirement on the heating rate from room temperature to quenching temperature, and any heat-up process well known in the art can be used.

In the present disclosure, after the quenched bars are obtained, they are annealed to get the carburizing bearing steel. In the present disclosure, the temperature for annealing is 170 °C ±10 °C, and more preferably 170 °C; the holding time is 1~2 hours, and more preferably 2 hours; the cooling way for annealing is air cooling to room temperature Annealing is employed in the present disclosure so as to relieve the quenching stress.

Quenching and annealing are employed in the present disclosure so as to get ultrafine and uniform carbides on the surface and high surface hardness after carburizing, which are beneficial to enhancing the contact fatigue life of the bearing steel.

The carburizing bearing steel provided by the present disclosure and the preparation method thereof will be illustrated in detail below in combination with the following examples, which are not construed as the limitation on the protection scope of the present disclosure.

### Example 1

The steel of the present disclosure is smelted in a laboratory vacuum induction melting furnace, and casted into round ingots of 50 kg. 5 furnaces of steel are totally smelted for forging into rod-like samples, with the chemical ingredients shown in Table 1. NA1, NA2 and NA4 steel are the carburizing bearing steel of the present disclosure; NA3 is the bearing steel used as a reference example in which the content of Mn is not within the range of 0.40 to 0.70 wt% according to the present disclosure; and CV1 is the bearing steel used as the control. The steel ingots smelted in a laboratory vacuum induction melting furnace are homogenized at a high temperature of 1200 °C for 6 hours for the subsequent forging-cogging. The initial temperature for forging is 1150 °C, and the temperature for finish forging is 900°C. The initial section size is 120 mm casting blank, which is radially forged into round bars with a section size of 60 mm, and then cooled in water to room temperature. The round bars with a diameter of 60 mm are subject to the carburizing treatment at 930 °C for 12 hours, and cooled in oil to room temperature; then held at 820 °C for 0.5 hours for oil quenching to room temperature; and finally held at 170 °C for 2 hours for annealing, then cooled in the air to room temperature to get the carburizing bearing steel. The contact fatigue test (a thrust plate test with a maximum Hertz stress of 4.5 GPa) is carried out, with the results shown in Table 2 and Fig. 1.

**Table 1 Chemical compositions of steel of the present disclosure and traditional steel (wt%)**

| | C | Cr | Si | Mn | Ni | S | P | Mo | Nb | V |
|---|---|---|---|---|---|---|---|---|---|---|
| NA1 | 0.18 | 0.4 | 0.40 | 0.70 | 2.2 | 0.010 | 0.010 | 0.35 | 0.04 | 0.04 |
| NA2 | 0.20 | 0.5 | 0.35 | 0.50 | 1.6 | 0.010 | 0.015 | 0.15 | 0.08 | 0.20 |
| NA3 | 0.22 | 0.6 | 0.30 | 0.35 | 1.90 | 0.010 | 0.015 | 0.25 | 0.15 | - |
| NA4 | 0.24 | 0.5 | 0.20 | 0.40 | 1.90 | 0.005 | 0.010 | 0.20 | 0.20 | 0.10 |
| CV1 | 0.20 | 0.5 | 0.35 | 0.55 | 1.6 | 0.010 | 0.015 | 0.25 | - | - |

**Table 2 Results of contact fatigue life performances of steel of the present disclosure and traditional steel**

| | NA1 | NA2 | NA3 | NA4 | CV1 |
|---|---|---|---|---|---|
| Contact fatigue life L₁₀ (Number of times) | ≥ 10×10⁸ times | ≥ 2.0×10⁸ times | ≥ 2.0×10⁸ times | ≥ 2.0×10⁸ times | ≥ 5.0×10⁷ times |

It can be seen from Table 2 and Fig. 1 that, microalloying of Nb and V enhances the contact fatigue life L₁₀ of NA1-NA4 steel by more than 2-4 times compared with the L₁₀ of the traditional bearing steel smelted in the laboratory without microalloying.

The foregoing is only preferable implementation of the present disclosure.

## Claims

1. A carburizing bearing steel, wherein it comprises elements in the following contents:
0.18 to 0.24 wt% of C, 0.4 to 0.6 wt% of Cr, 0.20 to 0.40 wt% of Si, 0.40 to 0.70 wt% of Mn, 1.6 to 2.2 wt% of Ni, 0.15 to 0.35 wt% of Mo, 0.001 to 0.01 wt% of S, 0.001 to 0.015 wt% of P, 0.04 to 0.20 wt% of Nb, 0.04.to 0.20 wt% of V and the remaining iron.

2. The carburizing bearing steel according to claim 1, wherein the total quantity of Nb and V is less than 0.3 wt%.

3. A preparation method of the carburizing bearing steel according to claim 1 or 2, comprising the following steps:
preparation raw materials of the carburizing bearing steel are smelted to get steel ingots; the steel ingots having a chemical composition corresponding to the chemical composition of the carburizing bearing steel according to claim 1 or 2;
the steel ingots are homogenized and then processed into bars;
the bars are successively subjected to a carburizing treatment, a quenching and an annealing to get the carburizing bearing steel,
wherein the smelting process is an electro-slag remelting, ESR, a double vacuum melting, VIM + VAR with VIM being Vacuum Induction Melting and VAR being Vacuum Arc Remelting, an out-of furnace refining or a vacuum induction melting,
wherein the temperature for the homogenization is 1100 to 1250 °C, and the holding time is 2 to 6 hours,
wherein upon completion of the homogenization, the bars are processed by a hot forging or a hot rolling, the initial temperature for the hot forging or the hot rolling is 1150 to 1200 °C, and the temperature for a finish forging or a finish rolling is not lower than 900 °C,
wherein the temperature for the carburizing treatment is 930 °C ±10 °C, and the holding time is 6 to 12 hours, and the bars after the carburizing treatment are cooled in oil to room temperature,
wherein the temperature for the quenching is 820 °C ±10 °C, the holding time is 0.5 to 2 hours, and the cooling process for quenching is oil quenching to room temperature,
wherein the temperature for the annealing is 170 °C ±10 °C, the holding time is 1 to 2 hours, and the cooling process for the annealing is an air cooling to room temperature.

## Patentansprüche

1. Aufgekohlter Lagerstahl, welcher Elemente mit den folgenden Anteilen enthält:
0,18 bis 0,24 Gewichtsprozent C, 0,4 bis 0,6 Gewichtsprozent Cr, 0,20 bis 0,40 Gewichtsprozent Si, 0,40 bis 0,70 Gewichtsprozent Mn, 1,6 bis 2,2 Gewichtsprozent Ni, 0,15 bis 0. 35 Gewichtsprozent Mo, 0,001 bis 0,01 Gewichtsprozent S, 0,001 bis 0,015 Gewichtsprozent P, 0,04 bis 0,20 Gewichtsprozent Nb, 0,04 bis 0,20 Gewichtsprozent V und der Rest Eisen.

2. Aufgekohlter Lagerstahl nach Anspruch 1, wobei die Gesamtmenge an Nb und V weniger als 0,3 Gewichtsprozent beträgt.

3. Verfahren zur Herstellung des aufgekohlten Lagerstahls nach Anspruch 1 oder 2, welches die folgenden Schritte umfasst:
aufbereitete Rohstoffe des aufgekohlten Lagerstahls werden geschmolzen, um Stahlblöcke zu erhalten, wobei die Stahlblöcke eine chemische Zusammensetzung aufweisen, die der chemischen Zusammensetzung des aufgekohlten Lagerstahls nach Anspruch 1 oder 2 entspricht,
die Stahlblöcke werden homogenisiert und dann zu Stangen verarbeitet,
die Stäbe werden nacheinander einer Behandlung zur Aufkohlung, einem Abschrecken und einem Glühen unterzogen, um den aufgekohlten Lagerstahl zu erhalten,
wobei das Schmelzverfahren ein Elektroschlacke-Umschmelzen, ESR, ein doppeltes Vakuumschmelzen, VIM + VAR, wobei VIM für Vakuum-Induktionsschmelzen und VAR für Vakuum-Lichtbogen-Umschmelzen steht, eine Raffination außerhalb des Ofens oder ein Vakuum-Induktionsschmelzen ist,
wobei die Temperatur für die Homogenisierung 1100 bis 1250 °C beträgt und die Haltezeit 2 bis 6 Stunden beträgt,
wobei nach Beendigung der Homogenisierung die Stäbe durch ein Warmschmieden oder ein Warmwalzen verarbeitet werden, die Anfangstemperatur für das Warmschmieden oder das Warmwalzen 1150 bis 1200 °C beträgt und die Temperatur für ein Fertigschmieden oder ein Fertigwalzen nicht unter 900 °C liegt,
wobei die Temperatur für die Behandlung zur Aufkohlung 930 °C ± 10 °C beträgt und die Haltezeit 6 bis 12 Stunden beträgt und die Stäbe nach der Behandlung zur Aufkohlung in Öl auf Raumtemperatur abgekühlt werden,
wobei die Temperatur für das Abschrecken 820 °C ±10 °C beträgt, die Haltezeit 0,5 bis 2 Stunden beträgt und das Abkühlverfahren für das Abschrecken ein Abschrecken in Öl auf Raumtemperatur ist,
wobei die Temperatur für das Glühen 170 °C ±10 °C beträgt, die Haltezeit 1 bis 2 Stunden beträgt und das Kühlverfahren für das Glühen eine Luftkühlung auf Raumtemperatur ist.

## Revendications

1. Acier de cémentation à roulement, dans lequel il comprend des éléments dans les teneurs suivantes : 0,18 à 0,24 % en poids de C, 0,4 à 0,6 % en poids de Cr, 0,20 à 0,40 % en poids de Si, 0,40 à 0,70 % en poids de Mn, 1,6 à 2,2 % en poids de Ni, 0,15 à 0,35 % en poids de Mo, 0,001 à 0,01 % en poids de S, 0,001 à 0,015 % en poids de P, 0,04 à 0,20 % en poids de Nb, 0,04 à 0,20 % en poids de V et le reste étant du fer.

2. Acier de cémentation à roulement selon la revendication 1, dans lequel la quantité totale de Nb et V est inférieure à 0,3 % en poids.

3. Procédé de préparation de l'acier de cémentation à roulement selon la revendication 1 ou 2, comprenant les étapes suivantes :
des matières premières de préparation de l'acier de cémentation à roulement sont fondues pour obtenir des lingots d'acier ;
les lingots d'acier présentant une composition chimique correspondant à la composition chimique de l'acier de cémentation à roulement selon la revendication 1 ou 2 ;
les lingots d'acier sont homogénéisés puis transformés en barres ;
les barres sont successivement soumises à un traitement de cémentation, une trempe et un recuit pour obtenir l'acier de cémentation à roulement,
dans lequel le processus de fusion est une refusion sous laitier électroconducteur, ESR, une double fusion sous vide, VIM + VAR avec VIM étant une fusion par induction sous vide et VAR étant une refusion par arcs sous vide, un affinage hors four ou une fusion par induction sous vide,
dans lequel la température pour l'homogénéisation est de 1 100 à 1 250 °C, et le temps de maintien est de 2 à 6 heures,
dans lequel à l'issue de l'homogénéisation, les barres sont traitées par un forgeage à chaud ou un laminage à chaud, la température initiale pour le forgeage à chaud ou le laminage à chaud est de 1 150 à 1 200 °C, et la température pour un forgeage de finition ou un laminage de finition est supérieure ou égale à 900 °C,
dans lequel la température pour le traitement de cémentation est de 930 °C ± 10 °C, et le temps de maintien est de 6 à 12 heures, et les barres après le traitement de cémentation sont refroidies dans l'huile à la température ambiante,
dans lequel la température pour la trempe est de 820 °C ± 10 °C, le temps de maintien est de 0,5 à 2 heures, et le processus de refroidissement pour la trempe est une trempe à l'huile à température ambiante,
dans lequel la température pour le recuit est de 170 °C ± 10 °C, le temps de maintien est de 1 à 2 heures, et le processus de refroidissement pour le recuit est un refroidissement à l'air à température ambiante.
